# EUROPEAN PATENT APPLICATION

(11) **EP 2 328 148 A1**
(43) Date of publication of application: **01.06.2011**
(21) Application number: 09177214.5
(22) Date of filing: 26.11.2009
(51) Int. Cl.: G11B 7/26

(54) **Method of creating a surface layer on a disc.**

(71) Applicant: Pheenix Alpha AB, 171 29 Solna (SE)
(72) Inventor: Lagerstedt, Torgny, 113 52, Stockholm (SE)
(74) Representative: Platt, Timothy Nathaniel

(57) **Abstract**

Process for applying an even surface layer on an information surface of an optically readable disc (12). After spinning out of a covering layer material on the disc (12), it is slowed, and at a slow rotation of only a few revolutions/second of the disc (12) a gas flow is directed obliquely downwards and outwards against the outer periphery of the covering layer.

## Description

### BACKGROUND OF THE INVENTION

The present invention relates to a process for applying a surface layer of uniform thickness on an information surface of an optically readable discs, particularly a covering layer on a so-called blu-ray disc, in accordance with the preamble to claim 1.

Discs of blu-ray type have very strict requirements as to the evenness of the covering layer which covers the information side of the disc. The thickness of the covering layer on a blu-ray disc is typically 75 µm or 100 µm with a typical tolerance of at most ± 3 µm so the small information depressions on the disc surface can be correctly read by the reader device of the disc player in question. When applying a coating of blu-ray discs, normally so-called "spin coating" process is used where a covering layer is spun out on the information side of the disc from a center portion of a disc as the disc is rapidly rotated. A disadvantage of this known manner of applying the covering layer is that as the disc rotation stops, the covering material forms an annular bead from the outer periphery the disc and a few millimetres inwards due to the surface tension of the still not hardened covering material.

Methods to prevent this have been suggested, for example selective UV during of the outer edge area of the disc during the spinning process, but this can create problems with hardening of the excess material and can result in an uneven peripheral edge of the disc. Instead of the spinning process, there has been suggested to apply a foil of a predetermined thickness on the information surface, which is however technically complicated and expensive.

Furthermore, US 2003/0022515 A1 describes for example a method of a photoresist film or an antireflex layer on a semiconductor substrate with the spinning technique, where the drying of the layer can be controlled, and an even outer edge can be achieved by washing away a portion of the material layer with the solvent. A portion of the surface layer at its outer edge can be raised undesirably as a result of inadequate drying of the covering material or mixing of the solvent and the covering material. This can be washed away with the aid of a combination of solvent and a gas flow applied to the layer at a peripheral edge of the same. This technology is however not suitable to be used to solve the problem of achieving a uniform thickness of a cover layer from a center hole of a blu-ray disc all the way out to the outer peripheral edge and on the outer peripheral edge itself.

### SUMMARY OF THE INVENTION

It is a primary purpose of the present invention to suggest an improved process for applying an even uniform protective layer on an information surface of an optically readable disc, in particular a covering layer of a so-called blu-ray disc, where the build-up of an undesirable ring of the covering layer can be prevented at the periphery of the disc, achieving a uniform thickness of the covering layer from a center hole of the disc all the way out to the outer peripheral edge and on the outer peripheral edge itself. For this purpose the process according to the invention is characterized by the feature disclosed in claim 1, where at a slow rotation of only a few revolutions/second of a disc (12), a gas flow is directed obliquely downwards and outwards against the outer periphery of the covering layer to even out a thickening of the covering layer which otherwise forms at the outer periphery of the covering layer when rotation ceases, and to create a covering layer coating of even thickness even at the periphery outer edge (28) of the disc.

According to a preferred embodiment of the process according to the invention the gas flow is generated with the aid of one or more peripherally spaced gas jets directed obliquely downwards and outwards against the peripheral area of the covering layer, thus assuring an even thickness around the periphery.

According to a suitable alternative embodiment of the process according to the invention the gas flow is conducted down through a narrow gap surrounding the periphery of the disc, the gas flow being generated by suction from the underside of the chuck supporting the disc. This simplifies the construction of the equipment necessary, since no jets are required.

The outer housing can be rotatable in the same direction and at the same rotational speed as the chuck to minimize spattering when excess material strikes the inside of the housing.

The gas used is preferably air.

The invention will be described in more detail below with reference to the accompanying drawing.

### SHORT DESCRIPTION OF THE DRAWING

Figure 1 shows schematically a side view of a first embodiment of a device for applying a covering layer of uniform thickness on a blu-ray disc;
Figure 2 shows schematically a side view of a second embodiment of a device for applying a covering layer of uniform thickness on a blu-ray disc; and
Figure 3 shows an enlarged cross section through the outer peripheral area of a disc coated with the covering layer without treatment according to the invention.

### DETAILED DESCRIPTION OF THE PREFERRED EMBODIMENTS

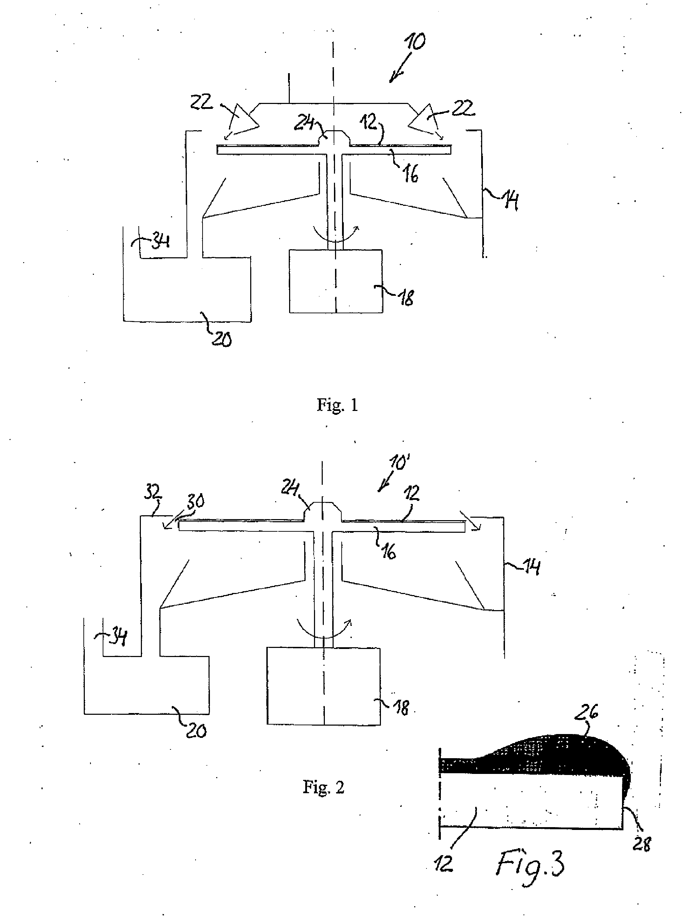

Figure 1 shows schematically a device 10 for applying a thin covering layer of uniform thickness on the information side of an optical disc 12. According to current specifications for blu-ray discs, the thickness of the covering layer should be typically 75 or 100 pm, with the thickness of a layer on the disc 12 of typically varying at most ± 3 µm. The device 10 comprises an outer housing 14, in which there is a rotatably moulded holder in the form of a chuck 16 for supporting the disc 12 during the application of the covering layer. The chuck 16 is rotated by a drive unit, commonly an electric motor 18. Beneath the chuck 16 there is a collecting trough 20 for excess material. A group of circumferentially spaced air jets 22 are disposed in a final phase of the application of the covering layer to direct air streams obliquely downwards and outwards against the outer periphery of the disc 12.

The application according to the invention of a uniformly thick covering layer on a disc 12 is done in the following manner. After placing a disc 12 with its information side facing upwards on the chuck 16, with the central hole of the disc threaded onto a spindle 24 of the chuck 16, a measured amount of liquid covering material is applied in the known manner as the disc 12 rotates slowly, from above and in the vicinity of the center of the disc 12 via a nozzle not shown, whereafter the disc is made to rotate rapidly with a rotational speed of several thousand rotations per minute for a predetermined time, so that the covering layer material is spun out at an even thickness of ca 100 µm. When the disc 12 then slowed down, the covering layer at the outer periperal disc 12 normally has the tendency, due to surface tension forces, to flow back radially a few millimetres inwards and there form an annular bead 26, as shown in Figure 3. In order to correct the formation of such bead 26 and to create an even covering layer all the way out to the peripheral edge 28 and to distribute the covering layer material into an even covering layer at the peripheral edge 28 itself, the jets 22 direct an air flow obliquely downwards and outwards against the outer peripheral area of the covering layer during slow rotation of the disc 12. Without such a directed air flow, a disadvantageous bead 26 is formed as well as an uneven covering coating on the peripheral edge 28.

Figure 2 shows an alternative solution of the problem with uneven covering of the information side of the disc, where the device 10', instead of using air jets 22, creates an air flow against the peripheral area of the disc 12 by suction via a narrow circumferential gap 30 between a radially inwardly directed wall portion 32 of the housing 14 and the peripheral edge of the disc 12. In order to create this suction, a fan (not shown) can be coupled to an air exhaust channel 34 leading from the collection trough 20. The width of the gap can be regulated by adjusting the position of the wall portion 32 or by adjusting the height of the chuck 16. Although not shown, the housing 14 can be rotatable in the same direction and at the same rotation of speed as the chuck 16 to minimize spattering when excess material strikes the inside of the housing.

## Claims

1. Process for applying an even covering layer of uniform thickness on an information surface of an optically readable disc (12), in particular a covering layer on a so-called blu-ray disc, comprising the steps of:
- placing the disc (12) with the information surface up on a horizontal, rotatable holder (16),.
- applying a covering layer material close to a central hole of a disc (12) in a predetermined amount during a slow rotation of the disc (12),
- causing the disc (12) to rotate at a high rotational speed of several thousand revolutions per minute to spin out a layer of covering layer material of a predetermined thickness over the information surface of the disc, whereafter the disc (12) is slowed down,
**characterized in that**, at a slow rotation of only a few revolutions/second of a disc (12), a gas flow is directed obliquely downwards and outwards against the outer periphery of the covering layer to even out a thickening of the covering layer which otherwise forms at the outer periphery of the covering layer when rotation ceases, and to create a covering layer coating of even thickness even at the peripheral outer edge (28) of the disc.

2. Process according to claim 1, **characterized in that** the gas flow directed against the covering layer is created with the aid of one or more circumferentially spaced gas jets (22), directed obliquely downwards and outwards against the peripheral area of the covering layer.

3. Process according to claim 1, **characterized in that** the gas flow directed against the covering layer is conducted down through a narrow gap (30) which surrounds the periphery of the disc (12), the gas flow stream being generated by suction from the underside of the holder (16) supporting the disc.

4. Process according to one of claims 1-3, **characterized in that** the outer housing (14) is rotatable in the same direction and at the same rotational speed as the chuck (16).

5. Process according to one of claims 1-4, **characterized in that** the gas is air.
